# FASCICULE DE BREVET EUROPEEN

(11) **EP 0 568 450 B1**
(45) Date de publication et mention de la délivrance du brevet: **30.10.1996**
(21) Numéro de dépôt: 93401100.8
(22) Date de dépôt: 28.04.1993
(51) Int. Cl.: G01L 5/04, F16H 7/08

(54) **Courroie de transmission à témoin de tension incorporé**
Treibriemen mit eingebautem Spannungs-Anzeiger
Drive belt with built-in tension indicator

(30) Priorité: 28.04.1992 FR 9205221
(43) Date de publication de la demande: 03.11.1993
(73) Titulaire: COLMANT CUVELIER SOCIETE DITE :, F-59000 Lille (FR)
(72) Inventeur: Salmon, Patrick, F-62840 Laventie (FR)
(74) Mandataire: Hud, Robert

(56) Documents cités:
- EP-A- 0 382 115
- GB-A- 1 484 954
- GB-A- 2 194 256
- US-A- 4 957 471
- XEROX DISCLOSURE JURNAL vol. 10, no. 4, Juillet 1985, page 249 K.R.BRYANT "Cable tensioning Aid".

## Description

L'invention concerne les courroies de transmission et, plus particulièrement, le contrôle de la tension de montage de telles courroies.

On sait que, lors du montage d'une courroie de transmission entre un organe menant et un organe mené, la valeur de la tension de la courroie doit être respectée de façon précise pour permettre une efficacité complète tout en assurant une durée de vie optimale de la courroie.

Actuellement, la vérification de la tension de montage d'une courroie de transmission comme dans EP-A-382115 nécessite un outillage particulier ce qui rend sa mise en oeuvre délicate et occasionne une perte de temps.

La présente invention a pour objet de remédier à cet inconvénient et elle propose à cet effet d'incorporer à la courroie de transmission un témoin qui permet de vérifier de façon simple, rapide et sans nécessiter d'outillage particulier, que la tension de montage de cette courroie correspond bien à la tension idéale préconisée par le constructeur.

Selon l'invention la courroie présente sur sa longueur, en un endroit approprié visible par l'utilisateur tel que le dos de cette courroie, deux repères espacés l'un de l'autre ainsi qu'une indication de la longueur que doit présenter l'écartement entre les deux repères pour que soit obtenue la tension de montage idéale. Cette valeur d'écartement est calculée par le constructeur en fonction de la section, de la longueur et des caractéristiques techniques de la courroie considérée.

On comprend que, après avoir installé la courroie, l'utilisateur en réalisera progressivement la tension tout en mesurant l'écartement croissant entre les deux repères portés par cette courroie jusqu'à atteindre la valeur de longueur indiquée sur la courroie, correspondant à la tension de montage recommandée.

Pour bien faire comprendre l'invention on en décrira ci-après, à titre d'exemple sans caractère limitatif, une forme d'exécution préférée en référence au dessin schématique annexé dans lequel :
la figure 1 est une vue partielle en plan du dos d'une courroie de transmission trapézoïdale comportant le témoin de tension de montage selon l'invention, la courroie étant représentée en position de repos ; et
la figure 2 est une vue analogue à la figure 1 dans laquelle la tension de montage recommandée est appliquée à la courroie.

En référence au dessin, on a représenté partiellement en 1 une courroie de transmission trapézoidale sur le dos 2 de laquelle sont portés deux repères constitués par deux traits transversaux parallèles 3 entre lesquels est portée la mention "TENSION DE MONTAGE = 150", cette mention indique la longueur en mm que doit présenter l'écartement entre les deux traits transversaux 3 pour que la courroie 1, une fois installée, subisse la tension de montage appropriée assurant à la courroie une durée de vie optimale.

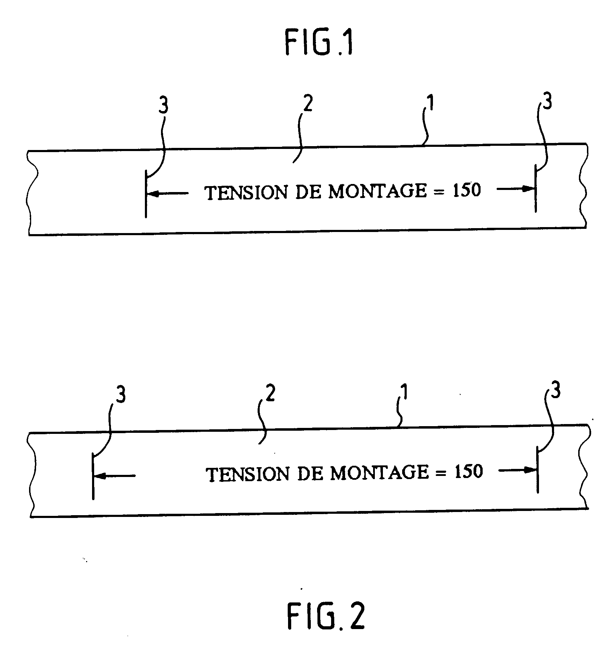

La valeur de longueur indiquée au dos 2 de la courroie 1 est bien sûr supérieure à l'écartement des repères 3 visible à la figure 1, correspondant à la position de repos de cette courroie. A la figure 2 on a représenté la position de la courroie 1 après installation et après que sa tension ait été réglée de façon que l'écartement des traits 3 atteigne juste la valeur de 150 mm préconisée, la vérification du bon règlage ne nécessitant alors que l'emploi d'une règle graduée.

On comprendra que la description ci-dessus a été donnée à simple titre d'exemple, sans caractère limitatif, et que des adjonctions ou des modifications constructives pourraient y être apportées sans sortir du cadre de l'invention. On comprendra en particulier que la valeur d'écartement de 150 mm constitue un simple exemple, et que cette valeur pourrait être toute autre en fonction de la section, de la longueur et des caractéristiques techniques de la courroie considérée.

## Revendications

1. Courroie de transmission à témoin de tension de montage incorporé portant sur sa longueur deux repères (3) espacés entre eux caractérisée en ce que la courroie (1) présente une indication de la distance devant séparer lesdits repères (3), lorsque la courroie (1) est installée, pour que la tension de montage exactement appropriée soit appliquée à la courroie, ladite indication de distance étant fonction de la section, de la longueur et des caractéristiques techniques de la courroie (1).

2. Courroie selon la revendication 1, caractérisée en ce que lesdits repères (3) sont portés sur le dos (2) de la courroie (1).

3. Courroie selon la revendication 1 ou la revendication 2, caractérisée en ce qu'elle est constituée par une courroie trapézoïdale.

## Patentansprüche

1. Treibriemen mit eingebautem Anzeiger der Montage-Spannung, der auf seiner Länge zwei voneinander beabstandete Markierungen (3) trägt, dadurch gekennzeichnet, daß der Riemen (1) eine Anzeige des Abstands aufweist, der die Markierungen (3) voneinander trennen soll, wenn der Riemen (1) eingesetzt ist, damit die genau geeignete Montage-Spannung am Riemen angelegt werden kann, wobei die Abstandsanzeige vom Querschnitt, von der Länge und den technischen Eigenschaften des Riemens (1) abhängig ist.

2. Riemen nach Anspruch 1, dadurch gekennzeichnet, daß die Markierungen (3) auf der Rückseite des Riemens angebracht sind.

3. Riemen nach Anspruch 1 oder 2, dadurch gekennzeichnet, daß er trapezförmig ist.

## Claims

1. Transmission belt with incorporated tension indicator and having two reference marks (3) spaced from one another along its length, characterised in that the belt (1) has an indication of the distance which must separate the two reference marks (3) when the belt (1) is installed so that the exactly appropriate installation tension is applied to the belt, the said indication of distance being a function of the cross-section, the length and the technical characteristics of the belt (1).

2. Belt as claimed in Claim 1, characterised in that the said reference marks (3) are borne on the back (2) of the belt (1).

3. Belt as claimed in Claim 1 or 2, characterised in that it is formed by a trapezoidal belt.
